(19) Europäisches Patentamt
European Patent Office
Office européen des brevets

(11) **EP 4 310 747 A1**

(12) **EUROPEAN PATENT APPLICATION**
published in accordance with Art. 153(4) EPC

(43) Date of publication:
**24.01.2024 Bulletin 2024/04**

(21) Application number: **21931557.9**

(22) Date of filing: **18.03.2021**

(51) International Patent Classification (IPC):
**G06Q 10/06** (2023.01)

(52) Cooperative Patent Classification (CPC):
**G06Q 10/06**

(86) International application number:
**PCT/JP2021/011108**

(87) International publication number:
**WO 2022/195807 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Toshiba Energy Systems & Solutions
  Corporation
  Saiwai-ku
  Kawasaki-shi
  Kanagawa 2120013 (JP)**
• **Toshiba Digital Solutions Corporation
  Kawasaki-shi, Kanagawa 212-0013 (JP)**

(72) Inventors:
• **KAMATANI Yukio**
  **Kawasaki-shi, Kanagawa 212-0013 (JP)**
• **ITOU Hidemasa**
  **Kawasaki-shi, Kanagawa 212-0013 (JP)**
• **TOBA Koji**
  **Kawasaki-shi, Kanagawa 212-0013 (JP)**
• **SHIBUYA Masato**
  **Kawasaki-shi, Kanagawa 212-0013 (JP)**
• **SAKAUCHI Yoko**
  **Kawasaki-shi, Kanagawa 212-0013 (JP)**

(74) Representative: **Hoffmann Eitle
Patent- und Rechtsanwälte PartmbB
Arabellastraße 30
81925 München (DE)**

(54) **INFORMATION PROCESSING DEVICE, INFORMATION PROCESSING METHOD, AND
PROGRAM**

(57) An information-processing device, information-processing method, and program capable of formulating proposed changes to social infrastructure are provided. The information-processing device has a generation unit and a formulation unit. The generation unit uses a policy function, which is a probability model for facility changes for a system having a graph structure, and generates a facility change proposal candidate. The formulation unit evaluates the reliability of the system, for each facility change proposal candidate generated by the generation unit.

FIG. 1

EP 4 310 747 A1

**Description**

TECHNICAL FIELD

Embodiments of the present invention relate to an information-processing device, an information-processing method, and a program.

BACKGROUND ART

In recent years, the problem of aging has been raised as a major issue for social infrastructure systems. For example, in electric power systems, the deterioration of substation facilities has been increasing worldwide, and it is important to formulate a facility investment plan. In order to solve such facility investment planning problems, solutions have been developed by experts in each field. In doing so, it is desirable to meet requirements such as scalability that can handle large scale, diversity that can set various facility types that make up the system, and variability that can flexibly respond to changes in facility configuration. However, it has been difficult to simultaneously satisfy these three conditions.

[Prior Art Documents]

[Patent Document]

[Patent Document 1]
Japanese Unexamined Patent Application, First Publication No. 2007-80260

[Non-Patent Document]

[Non-Patent Document 1]
Masayuki Nagata, Arisa Takehara, Leveling support tool for renewal of power distribution facilities considering supply reliability constraints - Development of prototype -, Research report R08001, Central Research Institute of Electric Power Industry, February 2009

[Outline of the Invention]

[Problems to be solved by the Invention]

The problem to be solved by the present invention is to provide an information-processing device, an information-processing method, and a program that can formulate a change proposal for social infrastructure.

[Means for solving the Problem]

The information-processing device of the embodiment has a generation unit and a formulation unit. The generation unit generates a facility change proposal candidate using a policy function, which is a probability model for facility changes in a system having a graph structure. The formulation unit evaluates the reliability of the system for each facility change proposal candidate generated by the generation unit.

BRIEF DESCRIPTION OF THE DRAWINGS

FIG. 1 is a diagram showing a configuration example of an information-processing device according to an embodiment.
FIG. 2 is a diagram describing the policy function.
FIG. 3 is a diagram describing the policy function.
FIG. 4 is a diagram describing an overview of processing according to the embodiment.
FIG. 5 is a diagram describing an evaluation example of the configuration of the circuit diagram shown in FIG. 4.
FIG. 6 is a diagram of a flow chart of the procedure for formulating a facility change proposal according to the embodiment.
FIG. 7 is a diagram describing an example of SAIFI improvement update according to a first embodiment.

FIG. 8 is a diagram showing a configuration example of an information-processing device according to the first embodiment.

FIG. 9 is a flow chart of the procedure for formulating a facility change proposal according to the first embodiment.

FIG. 10 is a diagram showing a configuration example of an information-processing device according to a second embodiment.

FIG. 11 is a flow chart of the procedure for formulating a facility change proposal according to the second embodiment.

FIG. 12 is a diagram showing a configuration example of an information-processing device according to a third embodiment.

FIG. 13 is a flow chart of the procedure for formulating a facility change proposal according to the third embodiment.

FIG. 14 is a diagram showing an example of an image displayed on the display device.

FIG. 15 is a diagram showing a structural example of an actual system.

FIG. 16 is a diagram showing an example of the definition of types of assumed nodes AN.

FIG. 17 is a diagram showing a neural network generated from the graph-structured data of FIG. 16.

FIG. 18 is a diagram showing the way to generate a neural network from graph-structured data.

FIG. 19 is a diagram describing a method of determining coefficients $\alpha_{i,j}$ in generating a neural network.

FIG. 20 is a diagram showing a mapping example of convolution processing and attention processing.

FIG. 21 is a diagram describing an example of selection for change.

FIG. 22 is a diagram showing the flow of information in an example of a learning method.

## MODE FOR CARRYING OUT THE INVENTION

An information-processing device, an information-processing method, and a program according to embodiments will be described below with reference to the drawings. Hereinafter, in the following description, a facility change proposal will be described as an example of processing handled by the information-processing device. It should be noted that this embodiment is not limited to solving the facility change planning problem for social infrastructure systems. Also, in the following example, a power grid system will be described as an example of a social infrastructure system, but the social infrastructure system is not limited to this. The social infrastructure systems may be systems such as water supply, gas, roads, and communications.

First, a configuration example of an information-processing device 1 will be described.

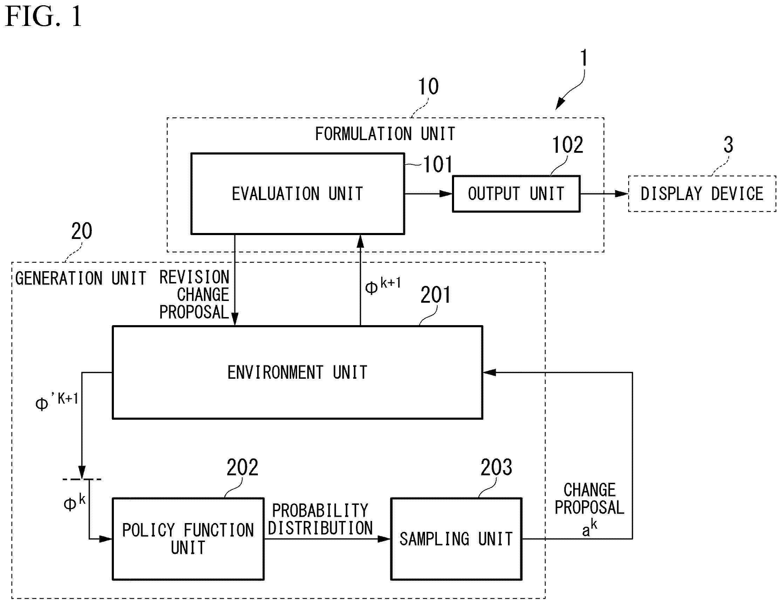

FIG. 1 is a diagram showing a configuration example of an information-processing device 1 according to this embodiment. As shown in FIG. 1, the information-processing device 1 includes a formulation unit 10 and a generation unit 20.

The formulation unit 10 includes an evaluation unit 101 and an output unit 102.

The generation unit 20 includes an environment unit 201, a policy function unit 202, and a sampling unit 203.

The evaluation unit 101 evaluates the reliability and prepares a correction change proposal. The evaluation unit 101 outputs the created correction change proposal to the environment unit 201. Moreover, the evaluation unit 101 outputs the revision change proposal to the output unit 102 when the revision changes of the revision change proposal converge.

The output unit 102 outputs the revision change proposal output by the evaluation unit 101 to an external device (for example, a display device 3).

The environment unit 201 is, for example, a target system, a model of the target system, a simulator, and the like. The environment unit 201 acquires the revision change proposal output by the evaluation unit 101, inputs the acquired revision change proposal into, for example, a model of the target system, and generates a system state ($\varphi^k$) at time k. The environment unit 201 outputs the generated system state ($\varphi^k$) to the policy function unit 202. Further, the environment unit 201 acquires a change proposal $a^k$ output by the sampling unit 203, inputs the acquired change proposal $a^k$ to, for example, the model of the target system, and generates a system state ($\varphi^{k+1}$) at k+1 time. The environment unit 201 outputs a generated k+1-th system state ($\varphi^{k+1}$) to the formulation unit 10.

The policy function unit 202 stores a policy function that is a probability model. The policy function unit 202 inputs the system state output by the environment unit 201 to the policy function and obtains the probability distribution of action selection for facility change correction. The policy function unit 202 outputs the obtained probability distribution of action selection to the sampling unit 203.

The sampling unit 203 acquires the probability distribution of action selection output by the policy function unit 202. The sampling unit 203 samples the change proposal $a^k$ based on the probability distribution and outputs the sampled change proposal $a^k$ to the environment unit 201. The policy function is a function that associates the probability of being selected with each action option in the state $\varphi^k$. The option is determined according to this probability. In sampling, for example, a real number from 0 to 1 is divided into line segments having a length corresponding to the probability value of each option, a line segment number (index) is attached, and depending on which section the random number generated by the uniform random number function from 0 to 1 is in, the option is selected with the corresponding line segment number.

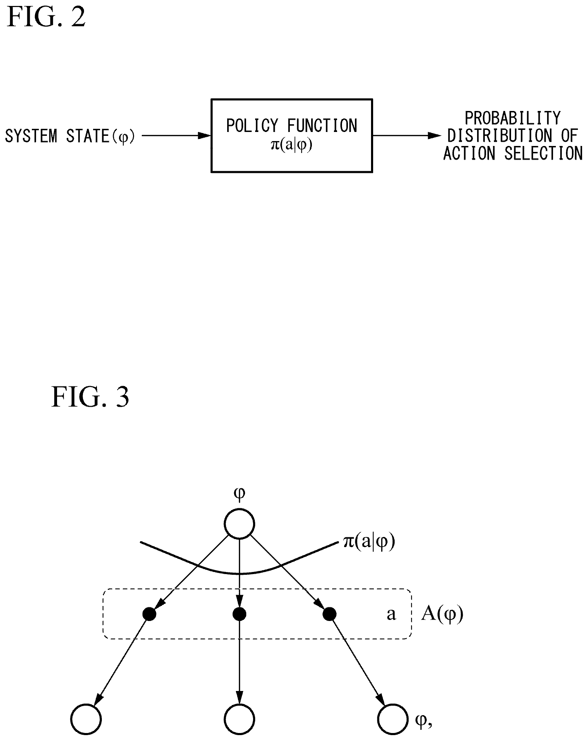

Next, the policy function will be described with reference to FIGS. 2 and 3. FIGS. 2 and 3 are diagrams describing the policy function.

As shown in FIG. 2, the policy function is a function that outputs the probability distribution of the next (k+1) action selection when the current (k-th) system state is input.

In addition, in the policy function, as shown in FIG. 3, in state <p, the candidate for the change proposal (next state) the next time is assumed to be $A(\varphi)$. The probability of extracting each candidate change proposal a ($\in A(\varphi)$) as the change proposal for the next time is $\pi(a|\varphi)$. In the policy function, choosing change proposal a results in a shift of the system state to $\varphi'$. Therefore, it is sufficient that the transition probabilities as shown in FIG. 3 be obtained as the policy function.

Here, an overview of the processing in this embodiment will be described.

In this embodiment, a system average interrupt frequency index (SAIFI), which is the occurrence rate of power outages, is evaluated as reliability while formulating a facility change proposal using a policy function. The SAIFI value is an international power system supply reliability index, and is an index obtained by the formula $\Sigma$ (power outage load number)$\times$(power outage occurrence rate)/(total load number). Therefore, a smaller SAIFI value indicates a highly reliable system with fewer power outages. In this embodiment, the state calculation result of the physical simulator such as the power flow is reflected in the evaluation, and the failure rate depending on the power flow can also be considered. The power flow-dependent failure rate is calculated by, for example, a power flow simulator. The tidal current simulator may be an external device, and may be included in the environment unit 201, for example.

In addition, in this embodiment, a facility change proposal candidate that improves SAIFI is selected as a facility change proposal. It should be noted that the facility change proposal is assumed to be facility change during a predetermined change period. In each of the following embodiments, an example using SAIFI as an example of reliability will be described, but the reliability may be any one according to the social infrastructure system. For example, if the social infrastructure system is communication, the reliability may be the disconnection rate of the communication network. In the case of social infrastructure system roads, the reliability may be the impassability rate of roads. Moreover, the reliability to be used is not limited to one type, and two or more types may be used. In addition, in reinforcement learning, as will be described later, learning may be performed with an emphasis on the cumulative facility investment cost of the system. Thus, according to the embodiment, it is possible to formulate a facility change proposal while achieving both cumulative cost and reliability.

It is assumed that the facility change proposal of this embodiment is facility change during a predetermined change period. In this embodiment, a plan with high reliability is formulated while evaluating SAIFI in the process of formulating a draft facility change proposal. It is assumed that the condition can define SAIFI for the circuit diagram.

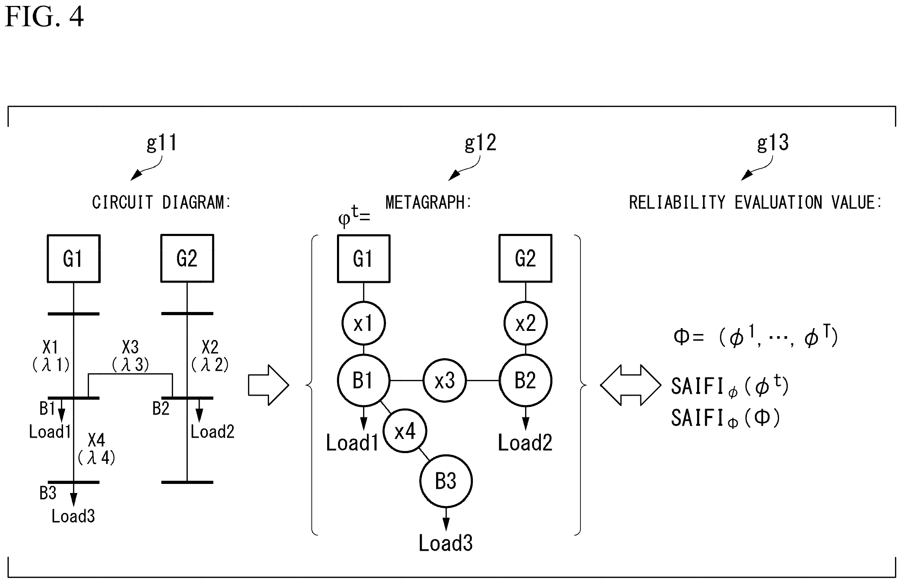

FIG. 4 is a diagram describing the outline of the processing according to this embodiment. In FIG. 4, symbol g11 represents a circuit diagram to be evaluated. Symbol g12 is a metagraph of the circuit diagram of symbol g11. Symbol g13 indicates that the metagraph of symbol g12 or its series is evaluated by obtaining a reliability evaluation value.

In symbols g11 and g12 in FIG. 4, G1 and G2 are generators. X1 to X4 represent transmission lines. B1 to B3 represent buses. $\lambda 1$ to $\lambda 4$ represent failure rates of transmission lines X1 to X4, respectively. Each of Load1 to Load3 represents a consumer.

In this embodiment, the SAIFI of this circuit is calculated using the failure rates $\lambda 1$ to $\lambda 4$. Since circuits and metagraphs correspond, SAIFI is determined corresponding to this metagraph. Here, if the circuit configuration is changed at timings of time 1, time 2, ... , time T, the metagraph sequence $\Phi=(\varphi^1, \varphi^2, ... , \varphi^T)$ is determined correspondingly. The metagraph changes in chronological order depending on the configuration and state of the facility.

Next, SAIFI will be described.

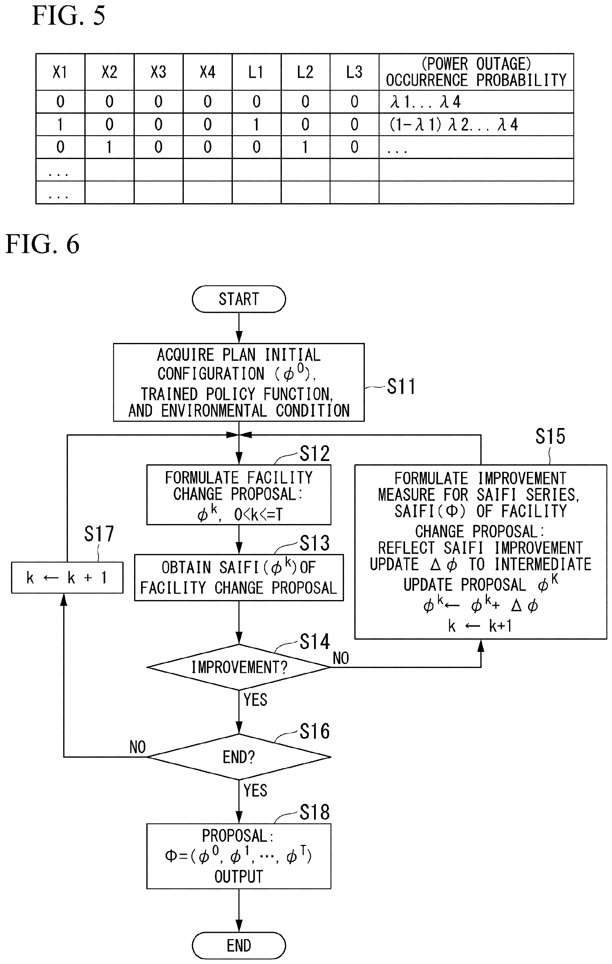

FIG. 5 is a diagram describing an evaluation example of the configuration of the circuit diagram of symbol g11 shown in FIG. In X1 to X4, "0" represents a disconnected state, and "1" represents a connected state. In L1 to L3, "0" represents a power failure state and "1" represents an energized state.

SAIFI calculation is performed by obtaining the power supply outage probability per load for a given system configuration and each facility failure probability, as shown in FIG. 5. Then, if the graph structure and failure rate of the system are known as shown in FIG. 5, the SAIFI for each customer can be calculated. When the facility is changed, the SAIFI value will change due to a change in the graph structure. Therefore, in the present embodiment, facility change proposal candidates are evaluated by evaluating SAIFI values, and facility change proposal candidates with improved SAIFI values are formulated as facility change proposals.

Here, an example of the SAIFI value for each country in the power system will be described.

For example, the index (0 to 3) for the frequency of annual power outages in Country A is 1, and the average number of power outages index (SAIFI value) is 8.2. As for the index related to the frequency of annual power outages, the higher the score, the lower the number of power outages and the shorter the duration. In addition, the index for the frequency of annual power outages in country B is 2, and the SAIFI value is 0.6. In addition, the index for the frequency of annual power outages in country C is 3, and the SAIFI value is 0.0. Thus, since the SAIFI value differs depending on the country or region, the standard value or threshold is also set according to the country or region.

Next, the procedure for formulating a facility change proposal will be described. In this example, in the change proposal, a policy will be described in which the SAIFI value of the system is always better, that is, smaller, than the preset threshold SAIFI_th. The setting of this threshold is, for example, the upper limit of the power outage occurrence rate set as the quality of the power supply service.

FIG. 6 is a flowchart of the procedure for formulating a facility change proposal according to this embodiment.

(Step S11)

The formulation unit 10 and the generation unit 20 acquire a system state $\varphi^0$ (initial state) to be evaluated. The generation unit 20 acquires policy functions and environmental conditions. The policy function is obtained by, for example, reinforcement learning. Also, the initial state $\varphi^0$ may have the same configuration as that of the trained neural network. In addition, the environmental conditions are, for example, the specifications of the facility that constitute the system, the characteristic model (cost model, etc.), the external environment of the system related to planning of facility change such as demand patterns (predicted values are acceptable) and power generation patterns in the case of electric power systems. Subsequently, the formulation unit 10 obtains and stores SAIFI ($\varphi^0$) corresponding to the initial state $\varphi^0$.

The formulation unit 10 and the generating unit 20 repeat the processes of steps S12 to S17 T times to change and correct the facility change proposal.

(Step S12)

The formulation unit 10 formulates a revision change proposal. The formulation unit 10 formulates a correction change proposal based on the initial state $\varphi^0$ in the first process, and formulates a correction change proposal based on the system state $\varphi^{1(=0+1)}$ in the second process. In this way, in the k-th process, the generation unit 20 inputs the revision/change proposal formulated by the formulation unit 10 to the environment unit 201 to obtain the system state $\varphi^{k+1}$. Subsequently, the generation unit 20 inputs the system state $\varphi^{k+1}$ to the policy function unit 202 to obtain a probability distribution. Subsequently, the generating unit 20 obtains the change proposal $a^k$ by sampling based on the obtained probability distribution. The generation unit 20 inputs the change proposal $a^k$ to the environment unit 201 to obtain the system state $\varphi^{k+1}$.

(Step S13)

The formulation unit 10 obtains SAIFI($\varphi^k$) corresponding to the system state <pk. The formulation unit 10 obtains SAIFI ($\varphi^0$) corresponding to the initial state $\varphi^0$ in the first processing, and SAIFI ($\varphi^1$) corresponding to the system state $\varphi^1$ (=0+1) in the second processing.

(Step S14)

The formulation unit 10 compares the preset threshold SAIFI_th with SAIFI($\varphi^k$) obtained in step S13, and determines whether SAIFI($\varphi^k$) has been improved from the threshold SAIFI_th. For example, the formulation unit 10 determines that the improvement is achieved when SAIFI($\varphi^k$) is equal to or less than the threshold SAIFI_th or when the ratio of SAIFI($\varphi^k$) to the threshold SAIFI_th is 1 or less. If the formulation unit 10 determines that the improvement has been made (step S14; YES), the process proceeds to step S16. If the formulation unit 10 determines that there is no improvement (step S14; NO), the process proceeds to step S15.

(Step S15)

Since it is determined that the improvement has not been made, the formulation unit 10 formulates improvement measures for SAIFI($\Phi$) of the facility change proposal candidate. Specifically, the formulation unit 10 reflects the SAIFI improvement update $\Delta\varphi$ in the system state $\varphi^k$. In this way, if no improvement has been made, the system state $\varphi^k$ is replaced in the k-th process. Subsequently, the formulation unit 10 substitutes k+1 for k, and returns to the process of step S12. The SAIFI improvement update $\Delta\varphi$ will be described in the first embodiment.

(Step S16)

The formulation unit 10 determines whether or not the processes of steps S12 to S16 have been repeated T times. When determining that the processes of steps S12 to S16 have been repeated T times (step S16; YES), the formulation unit 10 proceeds to the process of step S18. When determining that the processes of steps S12 to S16 have not been repeated T times (step S16; NO), the formulation unit 10 proceeds to the process of step S17.

(Step S17)

The formulation unit 10 substitutes k+1 for k, and returns to the process of step S12.

(Step S18)

The formulation unit 10 outputs the sequence $\Phi=(\varphi^1, \varphi^2, ..., \varphi^T)$ as a facility change proposal.

It should be noted that if there is no improvement even after performing the processing of steps S12 to S16 T times, the formulation unit 10 may output information indicating that the improvement was not made to the generation unit 20. In such a case, for example, the user may input other conditions to the formulation unit 10 and the generation unit 20, and the formulation unit 10 may formulate a correction change proposal again based on the given other conditions. Alternatively, in such a case, the generation unit 20 may formulate a plan not to change.

Here, a specific processing example will be described for the processing up to the second round.

The formulation unit 10 first outputs the initial state as a correction change proposal. Further, the formulation unit 10 obtains and stores SAIFI ($\varphi^0$) corresponding to the initial state $\varphi^0$.

Next, the generation unit 20 inputs the system state $\varphi^0$ to the policy function unit 202 and obtains the probability distribution of the next (first) action selection. Subsequently, the generation unit 20 obtains a change proposal $a^1$ by sampling from the probability distribution of action selection. Subsequently, the generation unit 20 inputs the change proposal $a^1$ to the environment unit 201 to obtain the next system state $\varphi^1$. The generation unit 20 outputs the determined next system state $\varphi^1$ to the formulation unit 10.

The formulation unit 10 obtains SAIFI ($\varphi^1$) corresponding to the system state $\varphi^1$. Next, the formulation unit 10 compares the threshold SAIFI_th and SAIFI($\varphi^1$) to determine whether or not there is an improvement. If it is determined that there is no improvement, the formulation unit 10 reflects the SAIFI improvement update $\Delta\varphi$ in the system state $\varphi^1$. Subsequently, the formulation unit 10 formulates a correction change proposal based on the reflected SAIFI improvement update $\Delta\varphi$.

Next, the generation unit 20 inputs the revision change proposal to the environment unit 201 and obtains the k=1st system state $\varphi'^1$. The reason the system state is $\varphi'^{k+1}$ instead of $\varphi^{k+1}$ is that the SAIFI improvement update $\Delta\varphi$ is reflected.

Subsequently, the generation unit 20 inputs the system state $\varphi'^1$ to the policy function unit 202 and obtains the probability distribution of the next (k=2 (=k+1)th) action selection. Subsequently, the generation unit 20 obtains a change proposal $a^2$ by sampling from the probability distribution of action selection. Subsequently, the generation unit 20 inputs the change proposal $a^2$ to the environment unit 201 and obtains the second system state $\varphi^{2 (=1+1)}$. The generation unit 20 outputs the determined second system state $\varphi^2$ to the formulation unit 10.

The formulation unit 10 obtains SAIFI ($\varphi^2$) corresponding to the system state $\varphi^2$. Next, the formulation unit 10 compares the threshold SAIFI_th and SAIFI($\varphi^2$) to determine whether or not there is an improvement. If it is determined that there is no improvement, the formulation unit 10 reflects the SAIFI improvement update $\Delta\varphi$ in the system state $\varphi^2$. Subsequently, the formulation unit 10 formulates a correction change proposal based on the reflected SAIFI improvement update $\Delta\varphi$.

Here, an example of SAIFI improvement update $\Delta\varphi$ will be described.

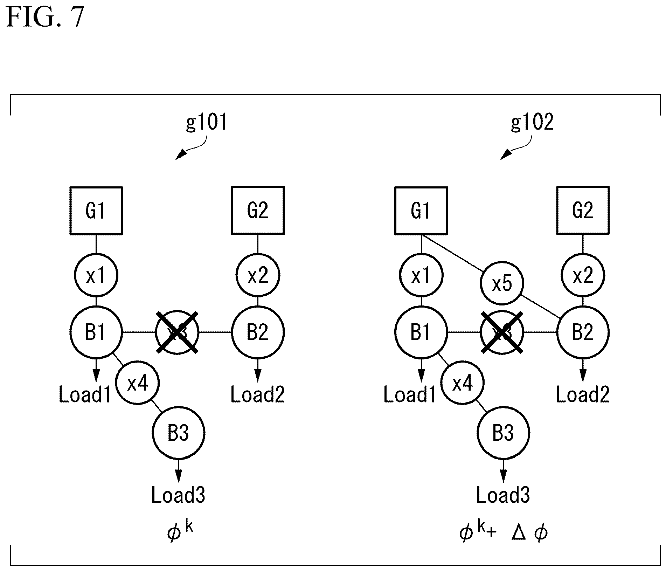

FIG. 7 is a diagram describing an example of SAIFI improvement update according to this embodiment. A case will be described in which the generation unit 20 generates a facility change proposal for deleting the link X3 as $\varphi^k$ based on the policy function. Symbol g101 is a metagraph of facility change proposal candidates for deleting link X3. The formulation unit 10 calculates the changed value. The formulation unit 10 assumes that the result of comparing the changed SAIFI value and the threshold SAIFI_th is that the changed SAIFI value is worse than the unchanged SAIFI value. In general, SAIFI can be improved by adding a redundant facility in the vicinity of the installation position of the facility to be changed. For this reason, the information-processing device 1 adds the link X5, for example, as reinforcement of the link path for both end nodes of the link X3, as indicated by g102.

Thus, in this embodiment, if the SAIFI value of the facility change proposal candidate selected based on the policy function becomes worse than the preset threshold SAIFI_th, the selected facility change proposal is corrected.

The SAIFI improvement update $\Delta\varphi$ in step S15 in FIG. 6 indicates, for example, connecting another link around the deleted link as symbol g102 in FIG. 7, or adding conditions such as deletion avoidance or enhancement.

Also, there can be more than one type of improvement proposal. When setting according to allowable conditions, or when SAIFI deteriorates due to the modified update proposal $\varphi^k$, it is considered that the deletion of facilities corresponding to the proposal or the deterioration of specifications (deterioration of reliability) causes the deterioration of the SAIFI value. Therefore, the information-processing device 1 may select an option of not adopting (not accepting) the modified update proposal $\varphi^k$, that is, replacing $\varphi^k$ without change. In FIG. 7, this corresponds to canceling the deletion of the link x3 for the revised update proposal $\varphi^k$.

As described above, in this embodiment, a policy function is used. In addition, in this embodiment, SAIFI is evaluated while preparing a facility plan. Furthermore, in the present embodiment, a plan is formulated taking into consideration the facility change for improving SAIFI as a condition. Specifically, during the planning (inference) of the plan change proposal, if there is no improvement, a good condition addition (Δφ) of the SAIFI value within the SAIFI allowable range is added.

As a result, according to this embodiment, it is possible to formulate a facility change proposal that satisfies the cost of facility change to some extent and also satisfies the conditions of SAIFI.

(First embodiment)

In the embodiment, a constraint may be added to the policy function for a revised update proposal that degrades SAIFI as a SAIFI improvement update policy. In the present embodiment, an example will be described in which the conditions for formulating a facility change proposal are the conditions for the policy function. In this embodiment, for example, by setting the output probability of the policy function for the revised update proposal to 0, the revised update proposal will not occur in the future.

First, a configuration example of the information-processing device 1A will be described.

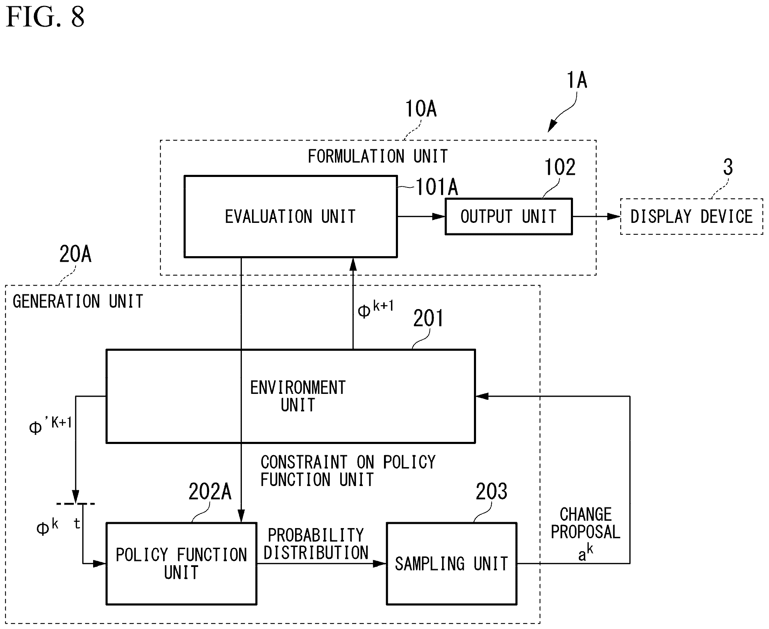

FIG. 8 is a diagram showing a configuration example of an information-processing device 1A according to this embodiment. As shown in FIG. 8, the information-processing device 1A includes a formulation unit 10A and a generation unit 20A.

The formulation unit 10A includes an evaluation unit 101A and an output unit 102.

The generation unit 20A includes an environment unit 201, a policy function unit 202A, and a sampling unit 203.

The functional units that operate in the same manner as the information-processing device 1 are denoted by the same reference numerals, and descriptions thereof are omitted.

In addition to the operation of the evaluation unit 101, the evaluation unit 101A generates constraints on the policy function. The evaluation unit 101A outputs the generated constraint to the policy function unit 202A. The restriction is, for example, by setting the output probability of the policy function for the revised update proposal to 0, so that the revised update proposal will not occur in the future.

The policy function unit 202A reflects the constraint output by the evaluation unit 101A, inputs the system state output by the environment unit 201 into the policy function, and obtains the probability distribution of action selection for facility change correction. The policy function unit 202A outputs the obtained probability distribution of action selection to the sampling unit 203.

Next, the constraints of the policy function used in this embodiment will be described.

In this embodiment, as in the first embodiment, processing is performed T times to select a facility change proposal. If the policy function is defined as the occurrence probability of the action candidate for the next k-th processing in the state $\varphi^{k-1}$ of the system at the k-1th time, the occurrence from the probability distribution $\pi(\cdot)$ is given by the following equation (1).

[Number 1]

$$ a^k \sim \pi\left( \bullet \middle| \phi^{k-1} \right) \quad \cdots (1) $$

Here, adding restrictions to the occurrence of the updated action plan $a^k$ in the action space can be considered as follows. Since the occurrence of the update action plan $a^k$ of the k-th process as a function of the state $\varphi^{k-1}$ at the k-1 th process causes the SAIFI degradation, the action for a specific state ($\varphi^{k-1}$) of the system is constrained at this k-1th process, and no constraints are imposed on different states.

Next, the procedure for formulating a facility change proposal will be described.

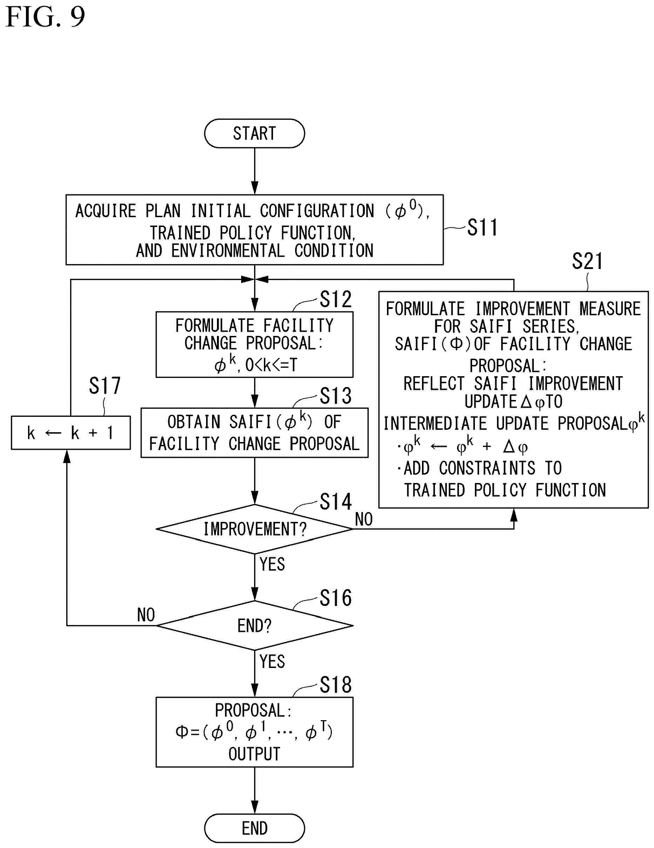

FIG. 9 is a flow chart of the procedure for formulating a facility change proposal according to this embodiment. The same reference numerals are used for the same processing as in the flowchart of the embodiment of FIG. 6, and the description thereof is omitted.

(Steps S11 to S14)

The formulation unit 10A and the generation unit 20A perform steps S11 to S14 in the same manner as in the embodiment. If the formulation unit 10A determines that an improvement has been made (step S14; YES), the process proceeds to step S16. If the formulation unit 10A determines that there is no improvement (step S14; NO), the process proceeds to step S21. The generation unit 20A generates each system state.

(Step S21)

If it is determined that an improvement has not been made, the formulation unit 10A formulates an improvement plan for SAIFI($\Phi$) of the facility change proposal candidate by adding constraints to the policy function. Specifically, the formulation unit 10A adds a constraint on the policy function and reflects the SAIFI improvement update $\Delta\varphi$ in the revised update proposal $\varphi^k$. That is, since the policy function is the probability of causing an action to occur, by adding a constraint to the value or setting the probability distribution for that action to 0, the candidate is prevented from occurring, that is, not selected. Subsequently, the formulation unit 10A substitutes k+1 for k, and returns to the process of step S12.

As described above, in the present embodiment, during the formulation (inference) of the plan change proposal, if there is no improvement, a constraint is added to the policy function to set a good condition ($\Delta\varphi$) for the SAIFI value within the SAIFI allowable range.

As a result, according to the present embodiment, for example, by setting the output probability of the policy function for the modified update proposal to 0, the modified update proposal is prevented from occurring in the future according to the system state. Thereby, it is possible to formulate a facility change proposal more efficiently than the embodiment.

(Second embodiment)

In this embodiment, an example will be described in which the SAIFI of each facility change proposal candidate is first calculated, and the plan is formulated by limiting to the facility change proposal candidates that satisfy the conditions for the SAIFI. Limiting to facility change proposal candidates as in the method shown in this embodiment is an extension of the method of adding constraints to the policy function performed in the second embodiment. In other words, it is a method that can consider the balance between the two indexes of minimizing the cumulative investment cost and securing the reliability, for example, the basic policy for policy function generation. The action decision process at an arbitrary time k is basically composed of two processes. That is, the first process (i) is the process of calculating each SAIFI value for each action candidate at time k, and the second process (ii) is the process of imposing a constraint on the policy function based on the SAIFI value and sampling from the constrained policy function to determine the action plan.

First, a configuration example of the information-processing device 1B will be described.

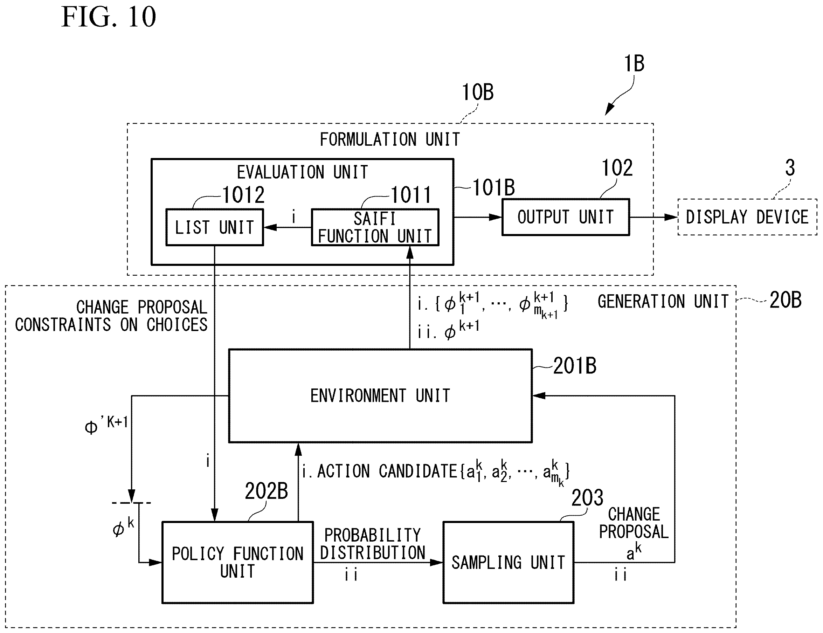

FIG. 10 is a diagram showing a configuration example of an information-processing device 1B according to this embodiment. As shown in FIG. 10, the information-processing device 1B includes a formulation unit 10B and a generation unit 20B.

The formulation unit 10B includes an evaluation unit 101B and an output unit 102. The evaluation unit 101B includes a SAIFI function unit 1011 and a list unit 1012.

The generation unit 20B includes an environment unit 201B, a policy function unit 202B, a sampling unit 203, and a candidate proposal list unit 204.

The functional units that operate in the same manner as the information-processing device 1 are denoted by the same reference numerals, and descriptions thereof are omitted.

The operation and processing of each functional unit of the information-processing device 1B will be described below. In the following description, it is assumed that the state of the system at arbitrary time k is $\varphi^k$.

The generation unit 20B extracts all candidates for the next state for that state. The policy function unit 202B generates next action candidates for the state $\varphi^k$. This is because the selection probabilities for action candidates are defined, so the policy function unit 202B extracts action candidates $\{a^k_1, a^k_2, \ldots, a^k_{mk}\}$ (mk is the number of candidates) with a probability greater than 0, and sends them to the environment unit 201B. The environment unit 201B obtains the state $\varphi^{k+1}i$ for each action candidate $a^k_i$. The environment unit 201B outputs the obtained state $\varphi^{k+1}_i$ for each action candidate $a^k_i$ to the evaluation unit 101B (i).

The evaluation unit 101B evaluates the reliability and creates a correction change proposal. The evaluation unit 101B evaluates the SAIFI value for each configuration plan of the correction update proposal candidates in the SAIFI function unit 1011 in advance before generating the correction update proposal in the process at the time k from the policy function. When the evaluation unit 101B determines a modified update proposal, it selects from a set of proposals whose SAIFI values satisfy the criteria. The evaluation unit 101B creates and stores the correction/change information of the policy function in the list unit 1012, and outputs it to the policy function unit 202B. In addition, the evaluation unit 101B outputs the revision change proposal to the output unit 102 when the revision changes of the revision change proposal converge.

The SAIFI function unit 1011 stores SAIFI functions. The SAIFI function unit 1011 obtains the next system state $\varphi^{k+1}$ output by the environment unit 201B, and inputs the obtained system state $\varphi^{k+1}$ to the SAIFI function to obtain SAIFI($\varphi^{k+1}$). The SAIFI function unit 1011 also calculates the SAIFI sequence $\{(a^k_i, \varphi^{k+1}_i, SAIFI(\varphi^{k+1}_i))\}$ (i=1, 2, ..., $m_k$) according to the action candidate $a^k_i$ and the state $\varphi^{k+1}_i$ caused in the process at time k. Here, $m_k$ is the number of action candidates for the k-th step.

The list unit 1012 stores SAIFI sequence $\{(a^k_i, \varphi^{k+1}_i, SAIFI(\varphi^{k+1}_i))\}$ (i=1, 2,..., $m_k$). The list unit 1012 acquires SAIFI ($\varphi^{k+1}$) output from the SAIFI function unit 1011. The list unit 1012 outputs candidate list information $\{(a^k_i, \varphi^{k+1}_i, SAIFI(\varphi^{k+1}_i))\}$ (i=1, 2, ... , $m_k$) indicating the acquired candidate list to the policy function unit 202B. As a result, the list unit 1012 imposes a constraint on the generation of the policy function on the policy function unit 202B.

In FIG. 10, reference ii denotes a second process of determining a change proposal using the result of the list of change proposal candidates. Description will be made based on this second process.

Based on the modified policy function (ii), the environment unit 201B acquires the proposed change action (ii) at time k output by the sampling unit 203, and generates the system state ($\varphi^{k+1}$) at time k+1. The environment unit 201 outputs the generated system state ($\varphi^{k+1}$) at time t+1 to the evaluation unit 101B (ii). The SAIFI function unit 1011 obtains SAIFI($\varphi^{k+1}$) and outputs it via the output unit 102. Alternatively, when the SAIFI sequence $\{(a^k_i, \varphi^{k+1}_i, SAIFI(\varphi^{k+1}_i))\}$ (i=1, 2, ..., $m_k$) is already stored in the list unit 1012, the environment unit 201B may directly input the action $a^k$ information selected by the sampling unit 203 to the formulation unit 10B. In this case, the evaluation unit 101B may refer to the corresponding state $\varphi^{k+1}$ and the corresponding SAIFI($\varphi^{k+1}$) value from the list unit 1012 and output them.

The policy function unit 202B stores policy functions. The policy function unit 202B imposes restrictions on the generation of the policy function by restricting the options of the revision change proposal based on the candidate list information output by the list unit 1012. The policy function unit 202B inputs the system state output by the environment unit 201B to the policy function and obtains the probability distribution of action selection for facility change correction. The policy function unit 202B outputs the obtained probability distribution of action selection to the sampling unit 203.

The constraint on the policy function shown in Example 1 is the rule that when the state $\varphi^{k+1}$ caused by the action $a^k$ does not satisfy the SAIFI condition, that is, when SAIFI($\varphi^{k+1}$) is greater than SAIFI_th, the action is not selected. This means that other action candidates are selected by the probability distribution ratio of the original policy function, which is different from the SAIFI evaluation that was the basis of the policy function, and for example, is an action selection based on cumulative cost minimization.

On the other hand, when the SAIFI value for each action candidate is obtained as in this embodiment, it is possible to easily select actions with good SAIFI values, that is, actions with small values. This corresponds to action selection that emphasizes reliability. Alternatively, if the probability is set by the ratio of the quotient (division) of the selection probability expressed by the policy function and the SAIFI value, an action with a good balance between reliability improvement and cost minimization will be selected. These evaluations may be added to the list unit of the evaluation unit 101B. The policy function unit 202B is constrained by the SAIFI evaluation in the evaluation unit 101B.

A procedure for formulating a facility change proposal in this embodiment will be described.

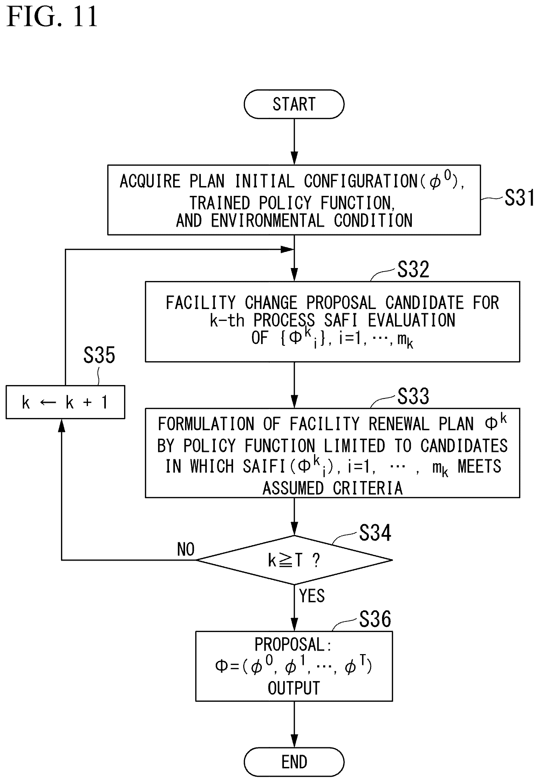

FIG. 11 is a flow chart of the procedure for formulating a facility change proposal according to this embodiment. In FIG. 11, $m_k$ is the number of facility change proposal candidates in the k-th process (process at time k), and $\varphi^k_i$ (i=1, ... , $m_k$) is the facility change proposal candidate in the k-th process.

(Step S31)

The formulation unit 10B acquires the system state $\varphi^0$ (initial state) to be evaluated. The generation unit 20B acquires policy functions and environmental conditions.

The formulation unit 10B and the generation unit 20B repeat the processing of steps S32 to S35 T times to formulate a facility change proposal. The generation unit 20B generates each system state.

(Step S32)

The formulation unit 10B evaluates in advance the SAIFI value ($\varphi^k_i$) for each configuration plan of the correction update proposal candidates $\{\varphi^k_i\}$ before generating the correction update proposal from the policy function.

(Step S33)

The formulation unit 10B preliminarily restricts only update proposals that satisfy the SAIFI condition based on the SAIFI value ($\varphi^k_i$) for each configuration plan of the modified update proposal candidates $\{\varphi^k_i\}$. For example, the formulation unit 10B evaluates each SAIFI value ($\varphi^k_i$) calculated in step S32 by comparing it with a preset threshold SAIFI_th. Then, by defining and adding constraint variables such as $e^k_i$=true (smaller than threshold), false (greater than threshold), i=1, ... , $m_k$ as a result of evaluation, the formulation unit 10B may select only actions that are true based on this variable as selection candidates. Then, the formulation unit 10B selects the facility change action $a^k$ in the k-th processing in the policy function unit 202B to which the condition is added. As described above, the formulation unit 10B may set the selection probability by assuming a balance between reliability improvement and cost minimization.

(Step S34)

The formulation unit 10B determines whether k is T or more. If the formulation unit 10B determines that k is equal to or greater than T (step S34; YES), the process proceeds to step S36. If the formulation unit 10B determines that k is less than T (step S34; NO), the process proceeds to step S35.

(Step S35)

The formulation unit 10B substitutes k+1 for k, and returns to the process of step S32.

(Step S36)

The formulation unit 10B outputs the series $\Phi=(\varphi^1, \varphi^2, ... , \varphi^T)$ as a plan change proposal.

In the above-described processing, the candidates for each k-th processing may vary depending on the state of the system at the previous time. Therefore, the number $m_k$ of facility change proposal candidates may also change depending on the state.

In the above example, SAIFI extracts facility change proposal candidates that meet the criteria as facility change proposals, but it is not limited to this. The formulation unit 10B may, for example, sort in the order of SAIFI values in the above process and extract in order of goodness (or exclude bad candidates), or may extract facility change proposal candidates with the highest values.

As described above, in this embodiment, before the policy function is generated, the SAIFI value for each configuration plan of the correction update proposal candidate is evaluated in advance to impose restrictions on the generation of the policy function. As a result, according to this embodiment, a policy function can be generated for a correction update proposal that satisfies the conditions. As a result, according to this embodiment, it is possible to formulate a facility change proposal efficiently.

(Third embodiment)

In the first embodiment, every k-th process within the planning period is shown as a procedure for continuing facility change planning by setting a constraint on the policy function as an improvement measure.

In this embodiment, since the planning based on the policy function is a stochastic process, if a sufficient number of plan proposals are generated, there is a possibility that there will be a plan that satisfies the SAIFI condition among them, and the proposal should be considered as a draft plan. In that case, there is an advantage that a highly reliable plan can be formulated efficiently without procedures such as correction of the described change proposal and restriction of the policy function. Hereinafter, the process when there is no proposal that satisfies the SAIFI condition among the plurality of plan proposals will be mainly described.

In this embodiment, a sequence of candidates for a facility renewal plan is formulated over a planning period, and a plurality of SAIFI sequences corresponding to that sequence are generated. In this embodiment, if there is a plan that satisfies the SAIFI condition and the cost condition from a plurality of plan series, it is taken as the plan as a result. If the SAIFI condition is not satisfied, the policy function is constrained so as to cause the largest deterioration among the calculated ones, or to constrain the option occurrence probability as a modified update proposal based on a predetermined criterion stored by the formulation unit, to recreate the entire planning series. The sequence of SAIFI is SAIFI $(\varphi^0)$, SAIFI $(\varphi^1)$, ... ,SAIFI $(\varphi^T)$.

First, a configuration example of the information-processing device 1C will be described.

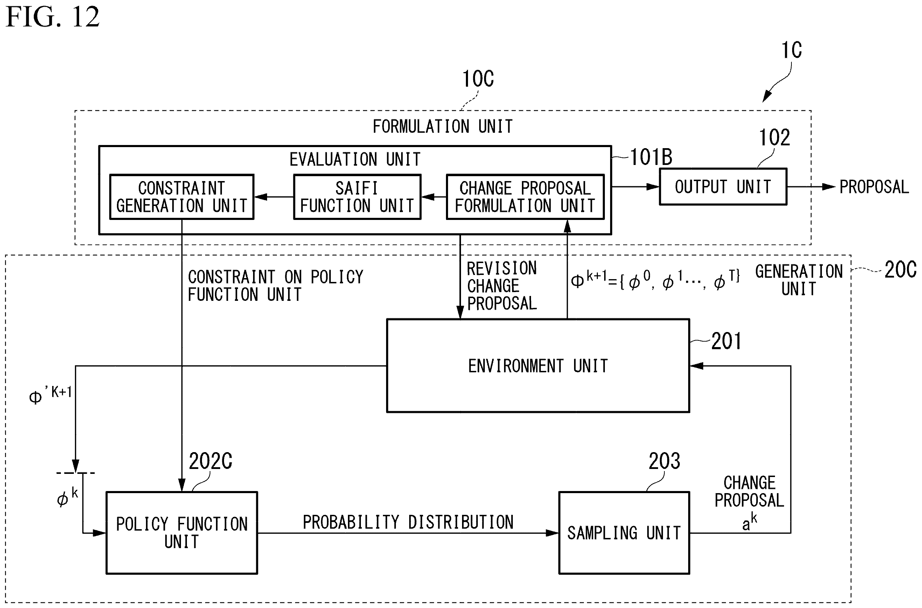

FIG. 10 is a diagram showing a configuration example of an information-processing device 1C according to this embodiment. As shown in FIG. 12, the information-processing device 1C includes a formulation unit 10C and a generation unit 20C.

The formulation unit 10C includes an evaluation unit 101C and an output unit 102. The evaluation unit 101C includes a change proposal formulation unit 1013, an SAIFI function unit 1014, and a constraint generation unit 1015.

The generation unit 20C includes an environment unit 201, a policy function unit 202C, and a sampling unit 203.

The functional units that operate in the same manner as the information-processing device 1 are denoted by the same reference numerals, and descriptions thereof are omitted.

The evaluation unit 101C calculates a sequence of SAIFI corresponding to a sequence of a plurality of facility renewal plan proposals over the planning period, and outputs the plan if the plan satisfies the conditions including the SAIFI conditions. Otherwise, a choice occurrence probability constraint on the policy function is generated so as to constrain the generation of actions within it that do not satisfy the SAIFI condition. The evaluation unit 101C may use, for example, the constraint variable $e^k_i$ introduced in the functional description of step S33 of the second embodiment as a constraint. However, since the constraint generally depends on the state $\varphi^k$ at that time, when the state is $\varphi^k$, the

selection candidates are constrained by the condition of $e^k_i$.

The change proposal formulation unit 1013 saves a plurality of sequences $\Phi=(\varphi^0, \varphi^1, ..., \varphi^T)$ of the equipment update plan over the planning period.

The SAIFI function unit 1014 stores SAIFI functions. The SAIFI function unit 1014 obtains the SAIFI of the sequence $\Phi$ of the facility renewal plan created by the change proposal formulation unit 1013.

The constraint generation unit 1015 calculates constraints on the policy function based on the SAIFI sequence corresponding to the sequence $\Phi$ of the facility renewal plan obtained by the SAIFI function unit 1014. The constraint generation unit 1015 extracts a change proposal that does not satisfy the conditions in the SAIFI sequence and generates a constraint of the option occurrence probability for the policy function so as to delete the change proposal from the selection candidates, and the generated constraint information is output to the policy function unit 202C.

The policy function unit 202C stores policy functions. The policy function unit 202C imposes restrictions on the generation of the policy function by restricting the options of the revision change proposal using the restriction information output by the constraint generation unit 1015. The policy function unit 202C inputs the system state output by the environment unit 201 to the policy function and obtains the probability distribution of action selection for facility change correction. The policy function unit 202C outputs the obtained probability distribution of action selection to the sampling unit 203.

Next, the procedure for formulating a facility change proposal will be described.

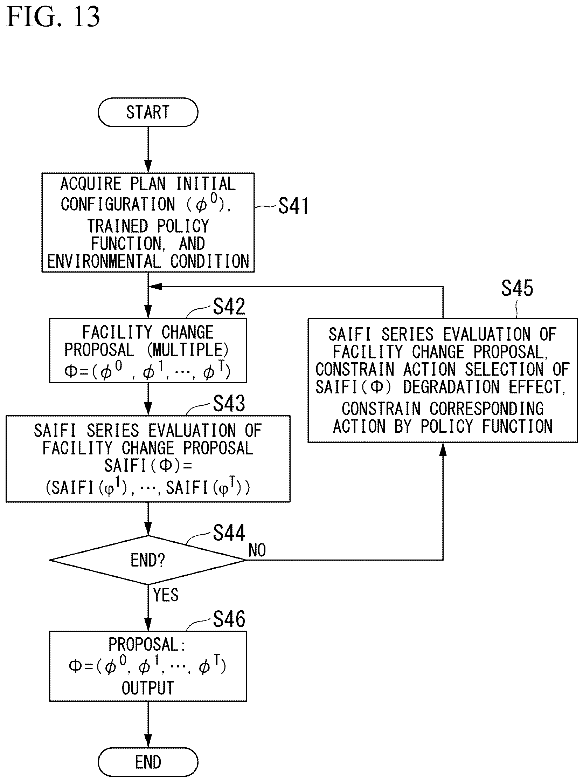

FIG. 13 is a flow chart of the procedure for formulating a facility change proposal according to this embodiment.

(Step S41)

The generation unit 20C acquires the system state $\varphi^0$ (initial state) to be evaluated, the policy function, and the environmental conditions.

The formulation unit 10C and the generation unit 20C repeat the processes of steps S42 to S46 to formulate a facility change proposal. The generation unit 20C generates each system state.

(Step S42)

The generation unit 20C generates all facility change proposal candidates $\varphi^k$ (k=0, ... , T) using the information acquired in step S41. Multiple series of facility renewal plan proposals are generated.

(Step S43)

The formulation unit 10C evaluates the SAIFI series SAIFI ($\Phi$) of the facility change proposal candidate. Accordingly, the formulation unit 10C evaluates whether or not there is a plan series that satisfies the conditions as a plan.

(Step S44)

The formulation unit 10C determines whether or not to end the process based on a predetermined criterion stored by itself. As for the predetermined criterion, if there is a plan that satisfies the conditions as a plan as evaluated in step S43, that plan is taken as the resulting plan, and the termination condition is satisfied. Alternatively, the predetermined criterion does not meet the termination condition if all sequences do not meet the condition. If the formulation unit 10C determines to end the process (step S44; YES), the process proceeds to step S46. If the formulation unit 10C determines not to end the process (step S44; NO), the process proceeds to step S45.

(Step S45)

The formulation unit 10C restricts the selection of actions that cause SAIFI($\Phi$) deterioration. The formulation unit 10C restricts action selection that causes SAIFI($\Phi$) deterioration by restricting the corresponding action with respect to the policy function, that is, making it a non-selection candidate. The formulation unit 10C returns to the process of step S42.

(Step S46)

The formulation unit 10C outputs the series $\Phi=(\varphi^1, \varphi^2, ... , \varphi^T)$ as a facility change proposal.

As another example of step S45, when the SAIFI value is degraded, for example, the changed part is strengthened for the facility change proposal candidate whose SAIFI value is greatly degraded. For example, in g102 of FIG. 7, the link X3 is not removed, and a neighboring facility (for example, the link X5) is added and strengthened. Alternatively, for the configuration after processing, the SAIFI value of the N-1 system (a state in which one link or node is down) is obtained, and strengthen the facilities corresponding to the deteriorated SAIFI (or the worst SAIFI, etc.) is strengthened. A correction proposal for such a specific state is set in the environment unit201 from the evaluation unit 101C.

As described above, in the present embodiment, during the planning (inference) of the facility change proposal, the changed part that affects SAIFI from the series of SAIFI (Φ) is specified, and the actions that have a large impact are restricted (measure added constraints to functions).

As a result, according to this embodiment, it is possible to efficiently formulate a facility change proposal by adding restrictions only when there is no plan that satisfies the conditions among the plurality of plans that have been formulated.

Also, in this embodiment, as step S45, a method of correcting each change proposal unit has been described, but a method of correcting each change step as in the first embodiment can also be adopted for this part.

All or part of the functional units of the information-processing device 1 (or 1A, 1B, 1C) described above are realized by executing a program (software) by a hardware processor such as a CPU (Central Processing Unit), for example. Some or all of these components are hardware such as LSI (Large Scale Integration), ASIC (Application Specific Integrated Circuit), FPGA (Field-Programmable Gate Array), GPU (Graphics Processing Unit), etc. circuit part; circuit), or by cooperation of software and hardware. The program may be stored in advance in a storage device such as a HDD (Hard Disk Drive) or flash memory, or stored in a removable storage medium such as a DVD or CD-ROM, and it may be installed by attaching the storage medium to the drive device.

Next, an example of an output image displayed on the display device 3 will be described.

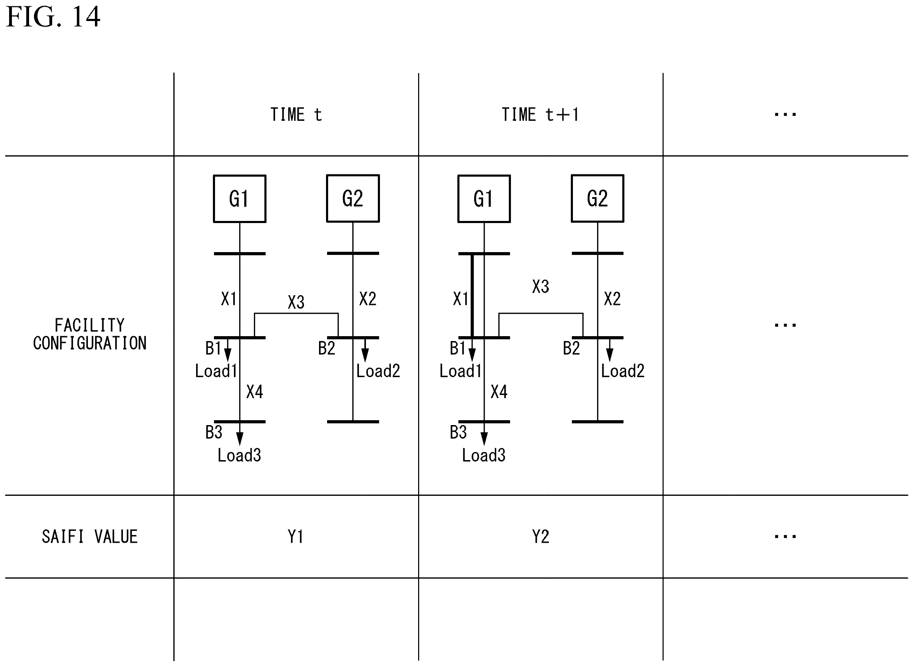

FIG. 14 is a diagram showing an example of an image displayed on the display device 3. As shown in FIG. 14, the output unit 102 generates a system configuration diagram (circuit diagram or metagraph) for each step (for each time and each process) and an image such as SAIFI, and displays the generated image on the display device 3. The display image shown in FIG. 14 is an example, and the display image is not limited to this.

Next, an example of a technique for expressing an actual system in a graph structure will be described.

For details of metagraphs, graph neural networks, etc. used in embodiments and examples, see Japanese Patent Application, First Publication No. 2019-204294.

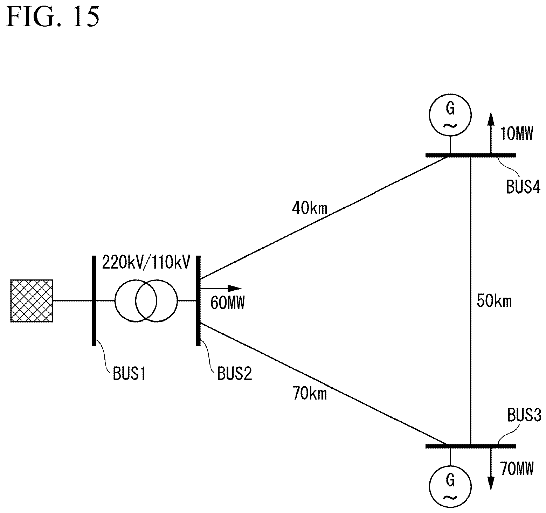

FIG. 15 is a diagram showing a structural example of an actual system. The example structure shown includes buses 1-4. A transformer for transforming 220 [kV] to 110 [kV] is provided between the bus 1 and the bus 2. A consumer of 60 [MW] is connected to the bus 2. The bus 2 and the bus 3 are connected by a power line of 70 [km]. A generator and a 70 [MW] consumer are connected to the bus 3. The bus 2 and the bus 4 are connected by a power line of 40 [km], and the bus 3 and the bus 4 are connected by a power line of 50 [km]. A generator and a 10 [MW] consumer are connected to the bus 4.

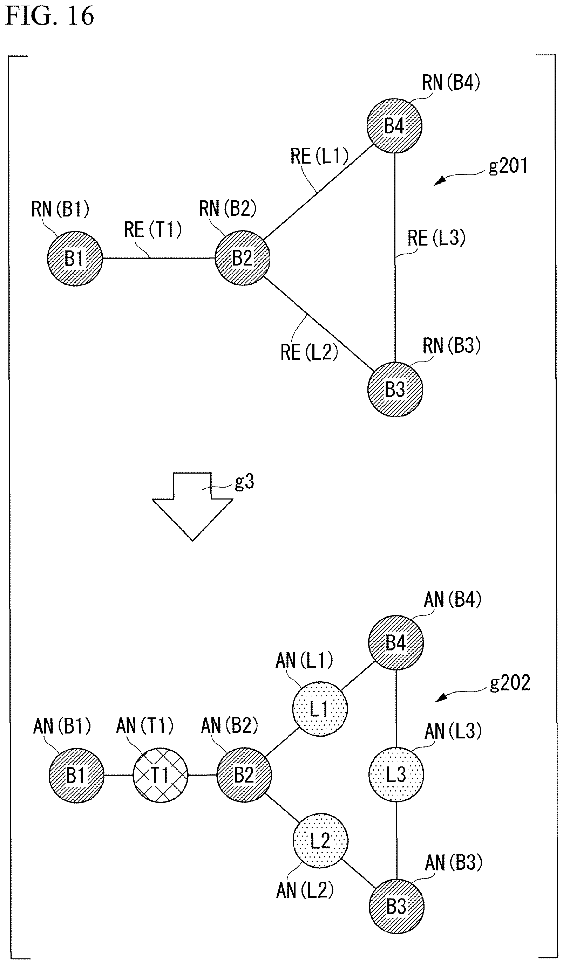

In the configuration as shown in FIG. 15, when the bus is considered as a real node, the transformer as a real edge of type "T", and the power line as a real edge of type "L", it can be expressed as shown in FIG. 16. FIG. 16 is a diagram illustrating an example of definitions of types of assumed nodes AN. Symbol g201 indicates an example of the content of graph-structured data, and symbol g202 schematically indicates how real nodes RN and real edges RE are converted into assumed nodes AN. In symbol g201, RN(Bx) (x is an integer from 1 to 4) indicates a real node, and RE(Ly) (y is an integer from 1 to 3) and RE(T1) indicate real edges.

When expressing the actual system in a graph structure, the graph structure data of code g201 is converted into an assumed node metagraph like code g202 (code g203). A method for converting graph-structured data into an assumed node metagraph will be described later. In symbol g202, AN(Bx), AN(T1) andAN(Ly) indicate real nodes. A graph such as the symbol g202 is called a metagraph.

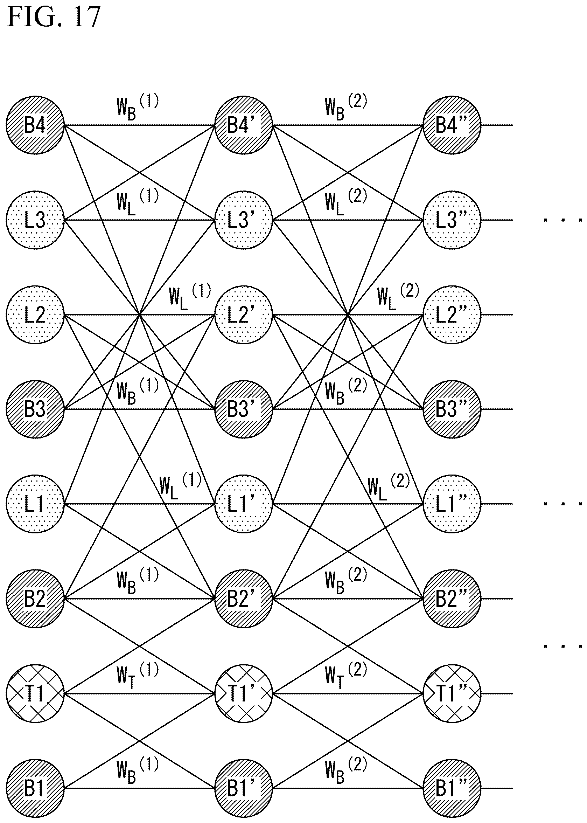

The metagraph in FIG. 16 can be represented as in FIG. 17 using a neural network structure. FIG. 17 is a diagram showing a neural network generated from the graph-structured data of FIG. 16. In FIG. 17, $WL^{(1)}$ and $WB^{(1)}$ are propagation matrices of the first hidden layer, and $WL^{(2)}$ and $WB^{(2)}$ are propagation matrices of the second hidden layer. Propagation matrix WL is the propagation matrix of node L from assumed nodes. Propagation matrix WB is the propagation matrix from node B's assumed nodes. Also, for example, B4' indicates an assumed node in the first intermediate layer, and B4" indicates an assumed node in the second intermediate layer.

A change in facility corresponds to a change in the convolution function corresponding to the facility (local processing). Adding facility corresponds to adding a convolution function. Discarding facility corresponds to deleting the convolution function.

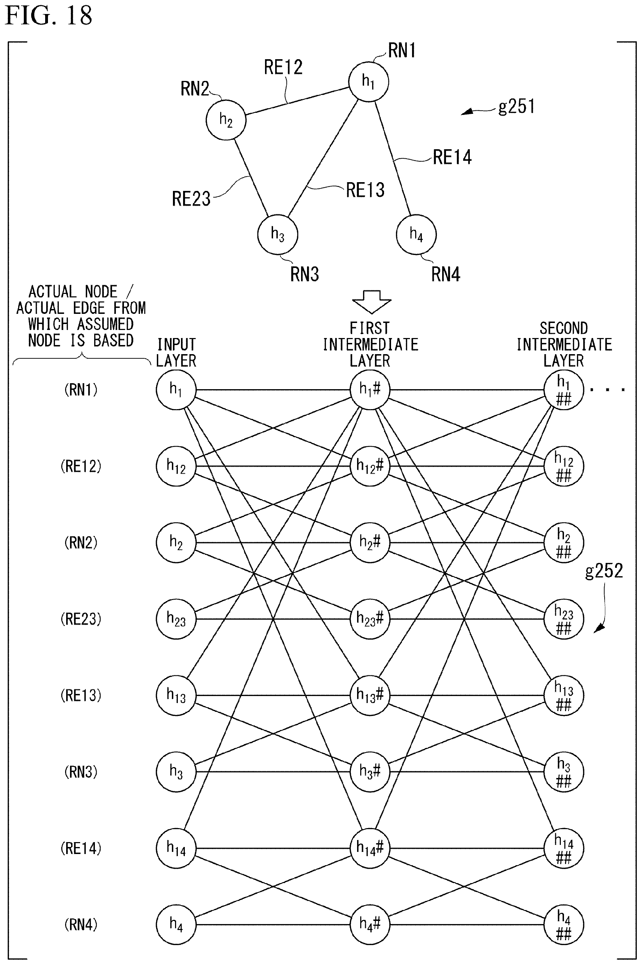

Next, the way to generate a neural network from graph-structured data will be described. FIG. 18 is a diagram showing how a neural network is generated from graph-structured data. In FIG. 18, reference g251 represents a graph structure. Reference g252 represents a neural network.

In the generation of the neural network, not only an actual node RN but also an assumed node AN including an actual edge RE are set, and a neural network is generated that propagates the feature amount of the k-1th layer of the assumed node AN to the feature amount of the k-th layer of other assumed nodes AN having a connection relationship and the assumed nodes AN themselves. k is a number equal to or greater than 1, and a layer with k=0 means an input layer, for example. The generation of the neural network may be performed, for example, by an external device or by an information-processing device.

In generating the neural network, for example, the feature value of the first intermediate layer is determined based on the following equation (2). The equation (2) corresponds to a calculation method for the feature amount $h_1\#$ of the first intermediate layer of the assumed node (RN1).

As an example, $\alpha_{1, 12}$ are coefficients that indicate the degree of propagation between the assumed node (RN1) and the assumed node (RE12). A feature amount $h_1\#\#$ of the second intermediate layer of the assumed node (RN1) is represented by the following equation (3). For the third and subsequent intermediate layers, the feature amounts are determined according to the same rule.

[Equation 2]

$$h_1\# = \alpha_{1,1} \cdot W \cdot h_1 + \alpha_{1,12} \cdot W \cdot h_{12} + \alpha_{1,13} \cdot W \cdot h_{13} + \alpha_{1,14} \cdot W \cdot h_{14} \cdots (2)$$

[Equation 3]

$$h_1\#\# = \alpha_{1,1} \cdot W \cdot h_1\# + \alpha_{1,12} \cdot W \cdot h_{12}\# + \alpha_{1,13} \cdot W \cdot h_{13}\# + \alpha_{1,14} \cdot W \cdot h_{14}\# \cdots (3)$$

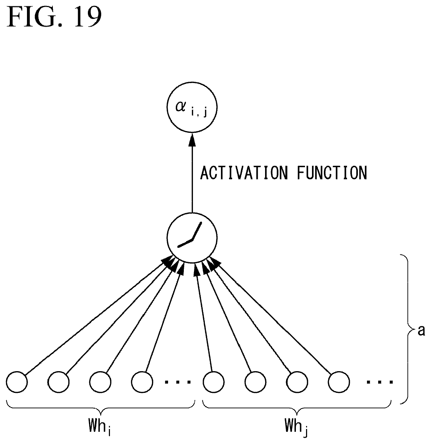

In generating a neural network, for example, coefficients $\alpha_{i,j}$ are determined by rules based on graph attention networks. FIG. 19 is a diagram describing a method of determining coefficients $\alpha_{i,j}$ in generating a neural network. The neural network generation device 100 inputs a vector ($Wh_i$, $Wh_j$), which is a combination of the vector Whi, which is obtained by multiplying the propagation matrix W by the feature value $h_i$ of the assumed node $RN_i$ of the propagation destination, and the vector $Wh_j$, which is obtained by multiplying the propagation matrix W by the feature value $h_j$ of the assumed node $RN_j$ of the propagation destination, to the individual neural network a (attention). The vector of the output layer is input to an activation function such as a sigmoid function, ReLU, or softmax function, normalized, and summed to derive the coefficient $\alpha_{i,j}$. The individual neural network a has parameters and the like obtained in advance for the event to be analyzed.

In generating the neural network, the parameters (W, $\alpha_{i,j}$) of the neural network are determined so as to meet the purpose of the neural network while following the above rules. The purpose of the neural network is to output a future state when the assumed node AN is the current state, or to output an index for evaluating the state, or to classify the current state.

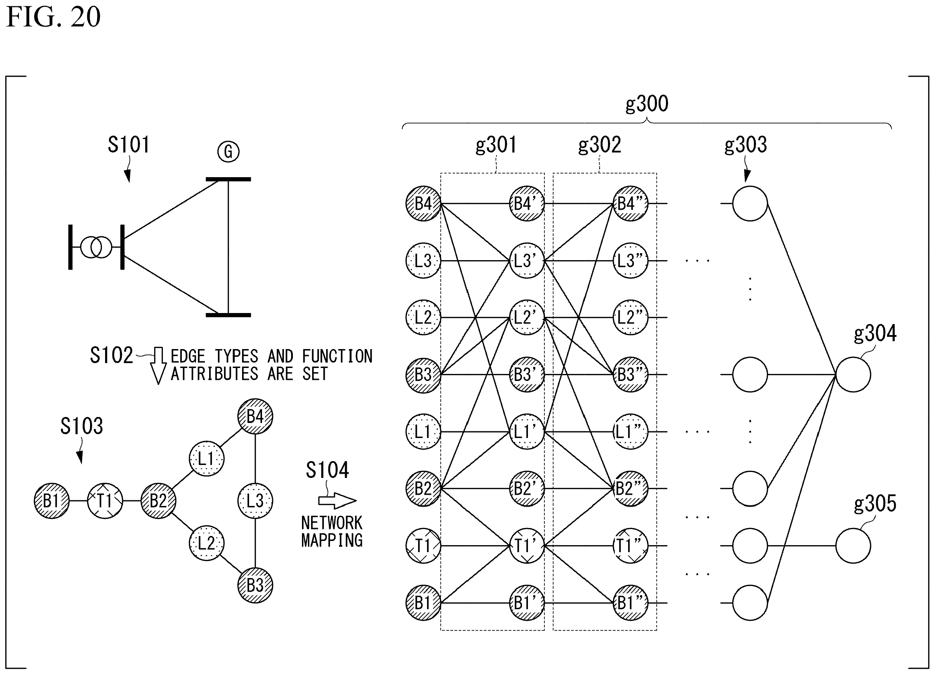

Next, an example procedure for formulating a facility change proposal series based on the facility's attention and convolution model will be described. FIG. 20 is a diagram showing a mapping example of convolution processing and attention processing.

First, the real system is represented by a graph structure (S101). Next, edge types and function attributes are set from the graph structure (S102). Next, it is represented by a metagraph (S103). Next, network mapping is performed (S104).

Symbol g300 is an example of network mapping. Reference g301 is an edge convolution module. Reference g3022 is a graph attention module. Reference g303 is a time series recognition module. Symbol g304 is a state value function V(s) estimation module. Reference g305 is an action probability p(als) calculation module.

Here, the facility change planning problem can be defined as a reinforcement learning problem. In other words, the facility change planning problem is defined as a reinforcement learning problem by taking the graph structure, each node, and edge (facility) parameters as states, adding or deleting facility as actions, and obtaining revenues and costs as rewards. can be done.

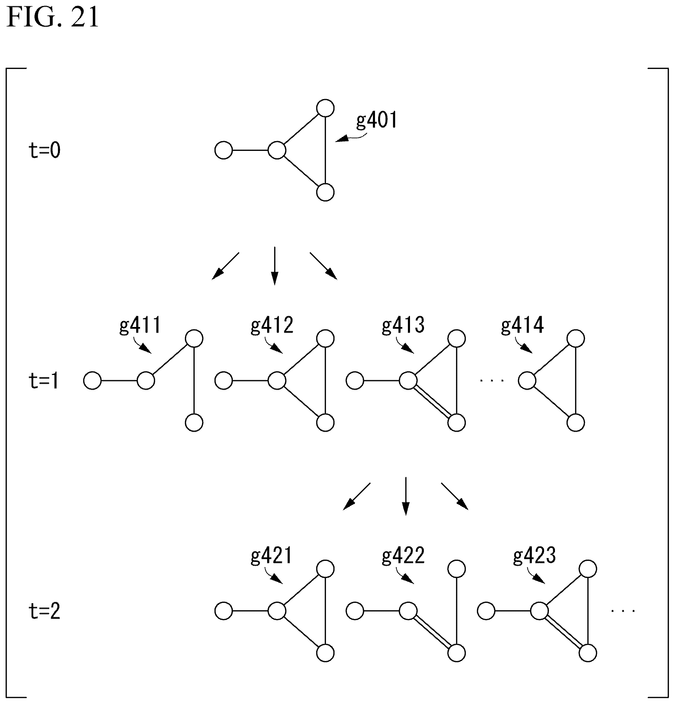

Examples of selection for change will be described. FIG. 21 is a diagram describing an example of selection for change.

Here, as an initial (t=0) state, consider a four-node graph structure like symbol g401.

From this state, n (n is an integer equal to or greater than 1) choices can be considered as change candidates for the next time t=1, such as symbols g411, g412, ... , g41n in the middle row.

For each of these options, the option for the next time t=2 is derived. Symbols g421, g422, g423, ... represent examples of options from the graph structure.

In this way, the selection series is expressed as a metagraph series that reflects changes, that is, as a series of node changes. In the embodiment, reinforcement learning is used as a means of extracting those sequences that match the policy from among such sequences.

In this way, the constructed graph neural network always corresponds to the system configuration on the environment side. In the generation of the neural network, reinforcement learning is advanced using the new state S, the reward value obtained based thereon, the value function estimated on the neural network side, and the policy function as the evaluation results on the environment side.

Next, an example of obtaining a policy function through learning will be described. Here, an example using A3C (Asynchronous Advantage Actor-Critic) as a learning method will be described, but the learning method is not limited to this. In the embodiment, reinforcement learning is used as means for extracting a selection series that matches the reward. Also, the reinforcement learning may be, for example, deep reinforcement learning. The reinforcement learning is performed by a learning device 500 as shown in FIG. 21, for example.

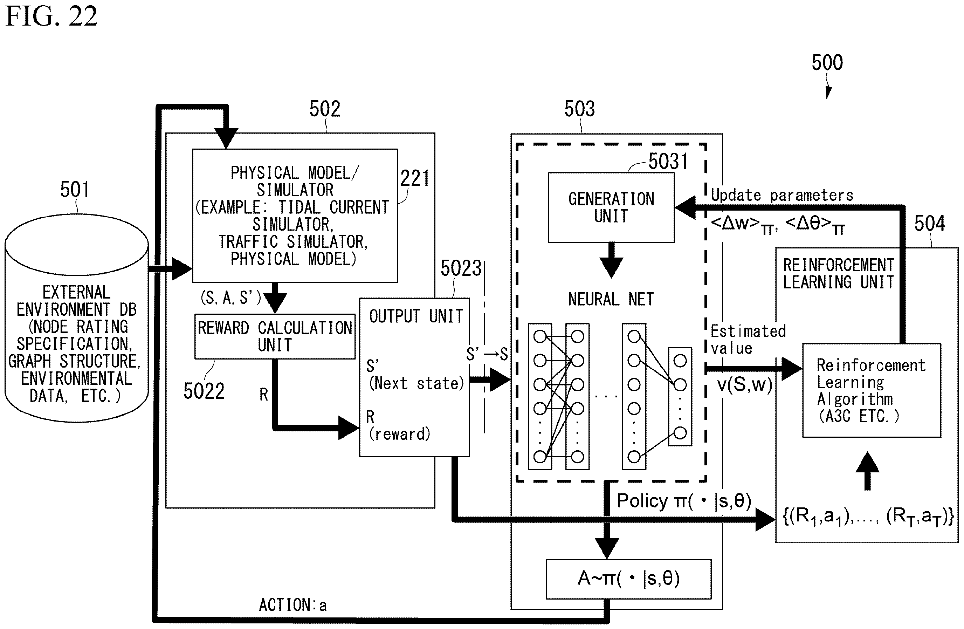

FIG. 22 is a diagram showing the flow of information in the learning method example. As shown in FIG. 22, the learning device 500 includes an external environment DB (database) 501, a system environment 502, a processing unit 503, and a reinforcement learning unit 504.

The system environment 502 includes a physical model/simulator 5021, a reward calculation unit 5022, and an output unit 5023.

The processing unit 503 includes a generation unit 5031.

The data stored in the external environment DB 501 are external environment data and the like. The environmental data is, for example, specifications of facility nodes, demand data in power systems, information on graph structures, etc., and is parameters that are not affected by environmental conditions and actions and that affect action decisions.

The physical model/simulator 5021 includes, for example, a tidal current simulator, a traffic simulator, a physical model, a function, an equation, an emulator, and a real machine. The physical model simulator 5021 acquires data stored in the external environment DB 501 as necessary, and performs simulation using the acquired data and the physical model. The physical model/simulator 5021 outputs the simulation result (S, A, S') to the reward calculation unit 5022. S is the system's Last State, A is the extracted action, and S' is the new state of the system.

The reward calculation unit 5022 calculates the reward value R using the simulation results (S, A, S') obtained from the physical model/simulator 5021. A method of calculating the reward value R will be described later. Also, the reward value R is $\{(R_1, a_1), \ldots, (R_T, a_T)\}$, for example. Here, T is the facility plan review period. Also, $a_p$ (p is an integer from 1 to T) is each node, for example, $a_1$ is the first node and $a_p$ is the p-th node.

The output unit 5023 sets the new state S' of the system as the state S of the system, and outputs the state S of the system and the reward value R to the processing unit 503.

The generation unit 5031 inputs the system state S output by the system environment 502 to the neural network stored in the processing unit 503 to acquire the policy function $\pi(\cdot|S, \theta)$ and the state value function V(S, w). Here, w is a weighting coefficient matrix (also called a convolution term) corresponding to the attribute dimension of the node. The generation unit 5031 determines action (facility change) A in the next step using the following equation (4).

[Equation 4]

$$A \sim \pi\left(\bullet \middle| S, \theta\right) \cdots (4)$$

Note that a in equation (3) corresponds to A in equation (4), and $\varphi$ in equation (3) corresponds to S in equation (4).

The generation unit 5031 outputs the determined next step action (facility change) A to the system environment 502. That is, the policy function $\pi(\cdot|S, \theta)$ is input with the state S of the system under consideration and outputs an action. The generation unit 5031 also outputs the obtained state-value function V(S, w) to the reinforcement learning unit 504. The policy function $\pi(\cdot|S, \theta)$ for selecting an action is given as a probability distribution of action candidates for changing the metagraph structure.

In this way, the generation unit 5031 inputs the state of the system to the neural network, and generates a system of one or more post-change models that cause possible structural changes to the neural network at each time step. A policy function and a state-value function required for reinforcement learning are obtained for each step, and structural changes of the system are evaluated based on the policy function.

The state value function V(S, w) output by the generation unit 5031 and the reward value R output by the system environment 502 are input to the reinforcement learning unit 504. The reinforcement learning unit 504 uses the input state value function V (S, w) and reward value R to repeat reinforcement machine learning by a machine learning method such as A3C for the number of times corresponding to the facility plan review period (T). The reinforcement learning unit 504 outputs parameters $<\Delta W>\pi$ and $<\Delta\theta>\pi$ obtained as a result of reinforcement machine learning to generation unit 5031.

The generation unit 5031 updates the parameters of the convolution function based on the parameters output by the reinforcement learning unit 504. The generation unit 5031 reflects the updated parameters $<\Delta W>\pi$ and $<\Delta\theta>\pi$ in the neural network, and evaluates the neural network reflecting the parameters.

Next, the functions and operations of the generation unit 5031 will be further described.

The generation unit 5031 acquires a "status signal" from the system environment 502, and as a part of it, a change information signal reflecting facility changes. The generation unit 5031 defines a metagraph structure corresponding to a corresponding new system configuration when a change information signal is acquired, and generates a corresponding neural network structure. At this time, the generation unit 5031 formulates a neural network structure that efficiently processes evaluation value estimation calculations for the value functions and policy functions required for the change proposal. Further, the generation unit 5031 refers to the convolution function stored therein corresponding to the changed portion, and constructs a metagraph corresponding to the actual system configuration from the set of convolution functions. Then, the generation unit 5031 changes the metagraph structure corresponding to the facility change (corresponding to the behavior, updates the graph structure, sets "candidate nodes", etc.). The generation unit 5031 associates attributes with nodes and edges and defines and manages them.

The generation unit 5031 has a convolution function definition function corresponding to the facility type and a convolution function parameter update function. The generation unit 5031 manages the partial metagraph structure and the corresponding convolution module or attention module. The generation unit 5031 defines a convolution function for a model representing graph-structured data based on the graph-structured data representing the structure of the system. The partial metagraph structure is a library function of individual convolution functions corresponding to each facility type node or edge. The generation unit 5031 updates parameters of individual convolution functions in the learning process.

The generation unit 5031 acquires the convolution module or attention module corresponding to the formulated neural network structure and the partial metagraph structure to be managed. The generation unit 5031 has a function of converting a metagraph into a multi-layer neural network, a function of defining the output function of the neural network of functions required for reinforcement learning, and a function of updating the parameter set of the convolution function or the neural network. Functions necessary for reinforcement learning are, for example, a reward function, a policy function, and the like. Also, the output function definition is, for example, a fully connected multi-layer neural network or the like that receives the output of the convolution function. Note that full connection is a mode in which each input is connected to all other inputs.

Next, an example of the reward function will be described.

The reward function is, for example, "(bias) - (facility installation, disposal, operation, maintenance costs)". The reward function may be defined as a positive reward value by modeling (functioning) the cost for each facility and subtracting it from the bias. The bias is a parameter that is appropriately set as a constant positive value so that the reward function value becomes a positive value.

Although several embodiments of the invention have been described, these embodiments are presented as examples and are not intended to limit the scope of the invention. These embodiments can be implemented in various other forms, and various omissions, replacements, and modifications can be made without departing from the scope of the invention. These embodiments and their modifications are included in the scope and spirit of the invention, as well as the scope of the invention described in the claims and equivalents thereof.

[Description of symbols]

1, 1A, 1B, 1C... Information-processing device, 10, 10A, 10B, 10C... Formulation unit, 20, 20A, 20B, 20C... Generation unit, 101, 101A, 100B, 101C... Evaluation unit, 102... Output unit, 201, 201B... Environment unit, 202, 202A, 202B... Policy function unit, 203... Sampling unit, 204... Candidate proposal list unit, 1011, 1014... SAIFI function unit, 1012... List unit, 1013... Change proposal formulation unit, 1015 ... Constraint generation unit

**Claims**

1.   An information-processing device, comprising:

   a generation unit that generates a facility change proposal candidate using a policy function, which is a probability model for facility changes in a system having a graph structure; and
   a formulation unit that evaluates the reliability of the system for each facility change proposal candidate generated by the generation unit.

2.   The information-processing device according to claim 1, wherein

   the system is a power system, and
   the reliability is a SAIFI (System Average Interrupt Frequency Index) value.

3.   The information-processing device according to claim 1 or claim 2, wherein

the policy function is obtained when performing reinforcement learning to optimize a structural change of the system, and

the formulation unit formulates the facility change proposal in the system so as to improve the reliability of the facility change proposal candidate.

4. The information-processing device according to claim 1 or claim 2, wherein

the policy function is obtained when performing reinforcement learning to optimize a structural change of the system, and

the formulation unit adds constraints to the policy function that has been learned by the reinforcement learning, and formulates the facility change proposal in the system so as to improve the reliability of the facility change proposal candidate.

5. The information-processing device according to claim 1 or claim 2, wherein

the policy function is obtained when performing reinforcement learning to optimize a structural change of the system, and

the formulation unit limits the facility change proposal candidate to a facility change proposal candidate whose reliability satisfies a predetermined criterion, extracts a facility change proposal from among the facility change proposal candidates that satisfy the criterion, and formulates the facility change proposal in the system.

6. The information-processing device according to claim 1 or claim 2, wherein

the policy function is obtained when performing reinforcement learning to optimize a structural change of the system, and

the formulation unit selects a facility change to the system that is greatly affected by a deterioration of the reliability, adds a constraint to the selected facility change by adding a constraint to the policy function, and formulates the facility change proposal in the system so as to improve the reliability of the facility change proposal candidate.

7. An information-processing method, wherein a computer

generates a facility change proposal candidate using a policy function, which is a probability model for facility changes in a system having a graph structure, and

evaluates the reliability of the system for each generated facility change proposal candidate.

8. A program that makes a computer

generate a facility change proposal candidate using a policy function, which is a probability model for facility changes in a system having a graph structure, and

evaluate the reliability of the system for each generated facility change proposal candidate.

FIG. 1

EP 4 310 747 A1

FIG. 2

SYSTEM STATE(φ) ⟶ POLICY FUNCTION $\pi(a|\varphi)$ ⟶ PROBABILITY DISTRIBUTION OF ACTION SELECTION

FIG. 3

φ

$\pi(a|\varphi)$

a : $A(\varphi)$

φ,

# FIG. 4

CIRCUIT DIAGRAM: (g11)

METAGRAPH: (g12) $\varphi^t=$

RELIABILITY EVALUATION VALUE: (g13)

$$\Phi = (\phi^1, \cdots, \phi^T)$$

$$\text{SAIFI}_\phi(\phi^t)$$

$$\text{SAIFI}_\Phi(\Phi)$$

## FIG. 5

| X1 | X2 | X3 | X4 | L1 | L2 | L3 | (POWER OUTAGE) OCCURRENCE PROBABILITY |
|---|---|---|---|---|---|---|---|
| 0 | 0 | 0 | 0 | 0 | 0 | 0 | $\lambda 1 \ldots \lambda 4$ |
| 1 | 0 | 0 | 0 | 1 | 0 | 0 | $(1-\lambda 1)\lambda 2 \ldots \lambda 4$ |
| 0 | 1 | 0 | 0 | 0 | 1 | 0 | . . . |
| . . . | | | | | | | |
| . . . | | | | | | | |

## FIG. 6

```
                    ┌─────────┐
                    │  START  │
                    └─────────┘
                         │
        ┌────────────────────────────────┐
        │   ACQUIRE PLAN INITIAL          │
        │   CONFIGURATION (φ⁰),           │── S11
        │   TRAINED POLICY FUNCTION,      │
        │   AND ENVIRONMENTAL CONDITION   │
        └────────────────────────────────┘
```

ACQUIRE PLAN INITIAL CONFIGURATION ($\phi^0$), TRAINED POLICY FUNCTION, AND ENVIRONMENTAL CONDITION — S11

S12 — FORMULATE FACILITY CHANGE PROPOSAL: $\phi^k$, $0 < k <= T$

S13 — OBTAIN SAIFI($\phi^k$) OF FACILITY CHANGE PROPOSAL

S14 — IMPROVEMENT?

S15 — FORMULATE IMPROVEMENT MEASURE FOR SAIFI SERIES, SAIFI($\Phi$) OF FACILITY CHANGE PROPOSAL: REFLECT SAIFI IMPROVEMENT UPDATE $\Delta\phi$ TO INTERMEDIATE UPDATE PROPOSAL $\phi^k$
$\phi^k \leftarrow \phi^k + \Delta\phi$
$k \leftarrow k+1$

S17 — $k \leftarrow k + 1$

S16 — END?

S18 — PROPOSAL: $\Phi = (\phi^0, \phi^1, \cdots, \phi^T)$ OUTPUT

END

FIG. 7

g101

G1
x1
B1
Load1  x4
B3
Load3

G2
x2
B2
Load2

$\phi^k$

g102

G1
x1  x5
B1
Load1  x4
B3
Load3

G2
x2
B2
Load2

$\phi^{k} + \Delta \phi$

FIG. 8

EP 4 310 747 A1

# FIG. 9

START

ACQUIRE PLAN INITIAL CONFIGURATION ($\phi^0$), TRAINED POLICY FUNCTION, AND ENVIRONMENTAL CONDITION — S11

S12
FORMULATE FACILITY CHANGE PROPOSAL: $\phi^k, 0 < k \leq T$

S21
FORMULATE IMPROVEMENT MEASURE FOR SAIFI SERIES, SAIFI($\Phi$) OF FACILITY CHANGE PROPOSAL:
REFLECT SAIFI IMPROVEMENT UPDATE $\Delta\varphi$ TO INTERMEDIATE UPDATE PROPOSAL $\varphi^k$
· $\varphi^k \leftarrow \varphi^k + \Delta\varphi$
· ADD CONSTRAINTS TO TRAINED POLICY FUNCTION

S17
$k \leftarrow k + 1$

S13
OBTAIN SAIFI($\phi^k$) OF FACILITY CHANGE PROPOSAL

S14
IMPROVEMENT?
NO
YES

S16
END?
NO
YES

S18
PROPOSAL: $\Phi = (\phi^0, \phi^1, \cdots, \phi^T)$ OUTPUT

END

FIG. 10

FORMULATION UNIT

EVALUATION UNIT

SAIFI FUNCTION UNIT

LIST UNIT

OUTPUT UNIT

DISPLAY DEVICE

GENERATION UNIT

ENVIRONMENT UNIT

i. $\{ \phi_1^{k+1}, \cdots, \phi_{m_{k+1}}^{k+1} \}$

ii. $\phi^{k+1}$

POLICY FUNCTION UNIT

SAMPLING UNIT

i. ACTION CANDIDATE $[a_1^k, a_2^k, \cdots, a_{m_k}^k]$

ii. PROBABILITY DISTRIBUTION

CHANGE PROPOSAL $a^k$

CHANGE PROPOSAL CONSTRAINTS ON CHOICES

$\phi'^{k+1}$

$\phi^k$

1B

10B

101B

102

1011

1012

20B

201B

202B

203

3

## FIG. 11

START

↓

ACQUIRE PLAN INITIAL CONFIGURATION($\phi^0$), TRAINED POLICY FUNCTION, AND ENVIRONMENTAL CONDITION — S31

↓

S32

FACILITY CHANGE PROPOSAL CANDIDATE FOR k-th PROCESS SAFI EVALUATION OF $\{\Phi^k_i\}, i=1, \cdots, m_k$

↓

S33

FORMULATION OF FACILITY RENEWAL PLAN $\Phi^k$ BY POLICY FUNCTION LIMITED TO CANDIDATES IN WHICH SAIFI($\Phi^k_i$), $i=1, \cdots, m_k$ MEETS ASSUMED CRITERIA

↓

S34

$k \geqq T$ ?

NO → S35: $k \leftarrow k + 1$

YES ↓

S36

PROPOSAL: $\Phi=(\phi^0, \phi^1, \cdots, \phi^T)$ OUTPUT

↓

END

FIG. 12

EP 4 310 747 A1

# FIG. 13

START

↓

ACQUIRE PLAN INITIAL CONFIGURATION ($\phi^0$), TRAINED POLICY FUNCTION, AND ENVIRONMENTAL CONDITION — S41

↓

FACILITY CHANGE PROPOSAL (MULTIPLE) $\Phi = (\phi^0, \phi^1, \cdots, \phi^T)$ — S42

↓

SAIFI SERIES EVALUATION OF FACILITY CHANGE PROPOSAL $\mathrm{SAIFI}(\Phi) = (\mathrm{SAIFI}(\varphi^1), \cdots, \mathrm{SAIFI}(\varphi^T))$ — S43

↓

S44 — END? — NO →

SAIFI SERIES EVALUATION OF FACILITY CHANGE PROPOSAL, CONSTRAIN ACTION SELECTION OF SAIFI($\Phi$) DEGRADATION EFFECT, CONSTRAIN CORRESPONDING ACTION BY POLICY FUNCTION — S45

YES ↓

PROPOSAL: $\Phi = (\phi^0, \phi^1, \cdots, \phi^T)$ OUTPUT — S46

↓

END

FIG. 14

| | TIME t | TIME t+1 | . . . |
|---|---|---|---|
| FACILITY CONFIGURATION | | | . . . |
| SAIFI VALUE | Y1 | Y2 | . . . |

EP 4 310 747 A1

FIG. 15

FIG. 16

# FIG. 17

FIG. 18

FIG. 19

$\alpha_{i,j}$

ACTIVATION FUNCTION

$a$

$Wh_i$

$Wh_j$

# FIG. 20

EP 4 310 747 A1

FIG. 21

FIG. 22

EP 4 310 747 A1

**INTERNATIONAL SEARCH REPORT**

| International application No. |
|---|
| PCT/JP2021/011108 |

A. CLASSIFICATION OF SUBJECT MATTER
Int. Cl. G06Q10/06(2012.01)i
FI: G06Q10/06 328

According to International Patent Classification (IPC) or to both national classification and IPC

B. FIELDS SEARCHED

Minimum documentation searched (classification system followed by classification symbols)
Int. Cl. G06Q10/06

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2020-135390 A (TOSHIBA CORP.) 31 August 2020 (2020-08-31), paragraphs [0025]-[0078] | 1, 3, 7-8<br>2 |
| Y | JP 2005-94870 A (THE KANSAI ELECTRIC POWER CO., INC.) 07 April 2005 (2005-04-07), paragraph [0002] | 2 |
| A | JP 2014-54151 A (TOSHIBA CORP.) 20 March 2014 (2014-03-20), entire text, all drawings | 1-8 |
| A | JP 2017-10520 A (PANASONIC INTELLECTUAL PROPERTY MANAGEMENT CO., LTD.) 12 January 2017 (2017-01-12), entire text, all drawings | 1-8 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31.05.2021 | 08.06.2021 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2021/011108

C (Continuation). DOCUMENTS CONSIDERED TO BE RELEVANT

| Category* | Citation of document, with indication, where appropriate, of the relevant passages | Relevant to claim No. |
|---|---|---|
| A | 中村泰．確率的パラメータを持つ方策関数に対する方策勾配法．電子情報通信学会技術研究報告．16 April 2008 (intake date), vol. 107, no. 542, pp. 343-348, entire text, all drawings, (NAKAMURA, Yutaka. Policy gradient method for a policy function with probabilistic parameters. IEICE Technical Report.) | 1-8 |
| A | WO 2020/008490 A1 (TOSHIBA CORP.) 09 January 2020 (2020-01-09), entire text, all drawings | 1-8 |
| A | KR 10-0705610 B1 (KOREA ELECTRIC POWER CORPORATION) 09 April 2007 (2007-04-09), entire text, all drawings | 1-8 |
| E, A | JP 2021-71791 A (TOSHIBA CORP.) 06 May 2021 (2021-05-06), entire text, all drawings | 1-8 |

Form PCT/ISA/210 (continuation of second sheet) (January 2015)

INTERNATIONAL SEARCH REPORT
Information on patent family members

International application No.

PCT/JP2021/011108

| Patent Documents referred to in the Report | Publication Date | Patent Family | Publication Date |
|---|---|---|---|
| JP 2020-135390 A | 31.08.2020 | (Family: none) | |
| JP 2005-94870 A | 07.04.2005 | (Family: none) | |
| JP 2014-54151 A | 20.03.2014 | (Family: none) | |
| JP 2017-10520 A | 12.01.2017 | (Family: none) | |
| WO 2020/008490 A1 | 09.01.2020 | (Family: none) | |
| KR 10-0705610 B1 | 09.04.2007 | (Family: none) | |
| JP 2021-71791 A | 06.05.2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007080260 A

- JP 2019204294 A

**Non-patent literature cited in the description**

- Leveling support tool for renewal of power distribution facilities considering supply reliability constraints - Development of prototype. **MASAYUKI NAGATA ; ARISA TAKEHARA.** Research report R08001. Central Research Institute of Electric Power Industry, February 2009